# EUROPÄISCHE PATENTANMELDUNG

(11) **EP 2 154 551 A1**
(43) Veröffentlichungstag der Anmeldung: **17.02.2010**
(21) Anmeldenummer: 08014357.1
(22) Anmeldetag: 12.08.2008
(51) Int. Cl.: G01V 1/28

(54) **Verfahren zum Erfassen von Veränderungen in einem Kohlenwasserstoff-Vorkommen**

(71) Anmelder: Geolab S.a.s., 38100 Trento (IT)
(72) Erfinder: Rode, Ernst, D., 38060 Isera (Trento) (IT)
(74) Vertreter: Keilitz, Wolfgang

(57) **Zusammenfassung**

Die Erfindung betrifft ein Verfahren zum Erfassen von Veränderungen eines Fluids in einem unterirdischen Reservoir, wobei zu mehreren Zeitpunkten mit Hilfe eines passiven Verfahrens, bei dem niederfrequente akustische Signale passiv mittels akustischer Sensoren (10) gemessen werden, Daten (1) verfasst werden. Veränderungen im Fluid können einfach und kostengünstig beobachten werden, wenn diese Daten mit statischen 3D-Daten (2) überlagert werden, die Mithilfe eines reflexionsseismischen Verfahrens erfasst wurden, so dass eine zeitliche Darstellung der Veränderung des Fluids möglich ist.

## Beschreibung

Die Erfindung betrifft ein Verfahren zum Erfassen von Veränderungen eines Fluids in einem unterirdischen Reservoir gemäß dem Oberbegriff des Patentanspruchs 1, sowie ein entsprechendes System gemäß dem Oberbegriff des Patentanspruchs 7.

Kohlenwasserstoff-Vorkommen wie z.B. Öl- und Gasfelder, können mit herkömmlichen Mitteln nur zu etwa 28% bis 34% (in manchen Gebieten ist der Ausbeutungsfaktor noch viel niedriger) ausgebeutet werden. D.h., etwa 66% bis 72% des Rohstoffes verbleiben im Reservoir. Im Hinblick auf den begrenzten Vorrat der Ressourcen sucht die ölfördernde Industrie nach Möglichkeiten zur Erhöhung des Ausbeutungsfaktors (Recovery Factor).

Um die Fördermenge eines Reservoirs zu steigern, ist es bekannt, ein Fluid, wie z. B. Wasser (oder auch Gas) in das Reservoir zu injizieren und somit den internen Druck des Reservoirs zu erhöhen. Dabei ist es sehr wichtig zu wissen, wo sich die Peripherie des Kohlenwasserstoff-Vorkommens befindet. Ebenso wichtig ist es, den Effekt der Wasserinjektion zu beobachten und zu kontrollieren, da eine Injektion von Wasser in falsche Bereiche des Reservoirs zu einer Zerstörung von Teilen des Reservoirs führen kann. Im schlimmsten Fall reduziert sich die Permeabilität des Gesteins so weit, dass das Vorkommen nicht weiter ausgebeutet werden kann.

Um die Veränderungen eines Fluids in einem Reservoir zu beobachten, wurde in den letzten Jahren ein Verfahren entwickelt, bei dem in bestimmten zeitlichen Abständen reflexionsseismische Untersuchungen durchgeführt werden. Dieses Verfahren wird auch als "4D-Seismik" bezeichnet. Aus dem Vergleich der zu verschiedenen Zeitpunkten aufgenommen Daten wird versucht, auf die Veränderungen des fluiden Systems im Reservoir und auf Veränderungen der Lithosphäre zu schließen. Das 4D-seismische Verfahren hat zum einen den Nachteil, dass es sehr empfindlich gegenüber veränderten Messbedingungen ist. Nur bei nahezu identischen Messbedingungen erhält man aussagekräftige Daten. Darüber hinaus ist bereits eine einzige seismische Untersuchung sehr teuer und kostet üblicherweise mehrere Millionen Euro.

Es ist somit die Aufgabe der vorliegenden Erfindung, ein Verfahren sowie ein System zu schaffen, mittels dessen das zeitliche Verhalten eines Fluids, insbesondere Öl, Gas oder Wasser, in einem Reservoir wesentlich einfacher und kostengünstiger beobachtet werden kann.

Gelöst wird diese Aufgabe gemäß der Erfindung durch die im Patentanspruch 1 sowie im Patentanspruch 7 angegebenen Merkmale. Weitere Ausgestaltungen der Erfindung sind Gegenstand von Unteransprüchen.

Ein wesentlicher Aspekt der Erfindung besteht darin, mit Hilfe eines passiven Verfahrens Daten über ein Kohlenwasserstoff-Vorkommen zu sammeln und diese Daten mit statischen 3D-Daten zu überlagern, die mit Hilfe eines reflexionsseismischen Verfahrens erfasst wurden. Aus den 3D-Daten kann ein Strukturmodell erzeugt werden, das den lithologischen Aufbau der Erdkruste im Bereich des Reservoirs darstellt. Durch Überlagerung des statischen Strukturmodells mit den passiv aufgezeichneten Daten kann eine Veränderung des Kohlenwasserstoff-Vorkommens beobachtet werden. Die Kombination von passiv aufgenommen (dynamischen) Daten und reflexionsseismischen (statischen) Daten hat somit den wesentlichen Vorteil, dass das Verhalten eines unterirdischen Kohlenwasserstoff-Vorkommens sehr genau und kostengünstig beobachtet werden kann.

Passive Verfahren, auf die hier Bezug genommen wird, arbeiten mit akustischen Sensoren, die niederfrequente akustische Signale an oder nahe der Erdoberfläche aufnehmen. Mit diesen Verfahren ist es beispielsweise möglich, das Volumen oder die Tiefe eines Kohlenwasserstoff-Vorkommens zu bestimmen. Passive Explorationsverfahren sind aus der Literatur grundsätzlich bekannt und in diversen Patenten beschrieben, wie z.B. in der DE 199 15 036, der DE 10 2004 028 034 oder deren EP 0 904 779. Diese Verfahren werden auch als "Infrasonic Passive Differential Spectroscopy", nachfolgend IPDS bezeichnet.

Das passive Messverfahren wird zu wenigstens zwei verschiedenen Zeitpunkten, vorzugsweise aber permanent durchgeführt. Die passiv aufgenommenen Daten können Informationen über die geometrische Ausdehnung des Fluids, die Tiefe des Horizonts oder den Druck im Reservoir an verschiedenen Orten enthalten. Weitere Eigenschaften des Fluids, wie z.B. die Lage einer Grenzschicht (z.B. zwischen Öl und Wasser) können ebenfalls beobachtet werden.

Gemäß einer bevorzugten Ausführungsform der Erfindung werden die passiv aufgenommenen Daten mittels fest installierter akustischer Sensoren gemessen. D. h. die einmal ausgesetzten Sensoren werden zumindest für zwei aufeinander folgende Messungen genutzt. Ein solches permanent installiertes System hat den Vorteil, dass es sehr viel billiger und effizienter ist als das wiederholte Aussetzen von Sensoren. Außerdem ermöglicht ein permanent installiertes System eine Online- Beobachtung von Veränderungen des Fluids.

Die von den akustischen Sensoren aufgenommenen Daten werden vorzugsweise über eine Kommunikationsschnittstelle, entweder drahtgebunden oder per Funk, an eine Auswerteeinheit übertragen. In der Verarbeitungseinrichtung ist vorzugsweise bereits ein statisches Strukturmodell enthalten, das aus den reflexionsseismischen Messdaten erzeugt wurde. In Kombination mit den passiv aufgenommenen Daten lässt sich somit ein dynamisches Strukturmodell erstellen, mit dem zeitliche Veränderungen des Fluids dargestellt werden können.

Die reflexionsseismischen 3D-Daten werden vorzugsweise nur einmal aufgenommen. Wiederholte reflexionsseismische Messungen sind nicht erforderlich. Das erfindungsgemäße Verfahren bzw. System ist daher erheblich kostengünstiger als bekannte 4D-seismische Verfahren.

Zu dem dynamischen Strukturmodell können außerdem noch weitere Daten wie z. B. Druck, Temperatur, Fördermengen, Wassergehalt hinzugefügt werden, die mittels anderer Sensoren gemessen wurden.

Die Erfindung wird nachstehend anhand der beigefügten Zeichnungen beispielhaft näher erläutert. Es zeigen:
Fig. 1 ein Flussdiagramm mit den wesentlichen Verfahrensschritten eines Verfahrens zur Erstellung eines dynamischen Strukturmodells;
Fig. 2 verschiedene Komponenten eines Systems zur Erstellung eines dynamischen Strukturmodells;
Fig. 3 das Spektrum einer Gasquelle im laufenden Betrieb bei offener Bohrung;
Fig. 4 das Spektrum derselben Quelle 6 Monate später bei geschlossener Bohrung; und
Fig. 5 symbolisch die Druckverteilung nahe einer offenen bzw. geschlossenen Bohrung.

Fig. 1 zeigt die wesentlichen Verfahrensschritte eines Verfahrens, mit dem sich Veränderungen eines Fluids in einem unterirdischen Reservoir, insbesondere einem Öl- oder Gasreservoir beobachten lassen.

Gemäß Block 1 wird ein passives Messverfahren ausgeführt, bei dem niederfrequente akustische Signale passiv mittels akustischer Sensoren gemessen werden. Aus einer Spektralanalyse der empfangenen seismischen Wellen in einem Frequenzbereich zwischen z. B. 0,5 und 10 Hz können insbesondere Informationen über die Existenz eines Kohlenwasserstoff-Vorkommens, dessen Ausdehnung und ggf. Tiefe ermittelt werden (im Folgenden IPDS-Daten).

Neben den IPDS-Daten 1 werden - sofern diese noch nicht bereits vorliegen - 3D-Daten gesammelt, die die lithologische Struktur der Erdkruste dreidimensional beschreiben (Block 2). Diese 3D-Daten 2 stammen vorzugsweise von einer oder mehreren reflexionsseismischen Messungen. Die 3D-Daten 2, der so genannte 3D-Cubus, werden in einer Struktur-Datenbank gespeichert (Block 4). Die IPDS-Daten 1 und die 3D-Daten 2 werden in Schritt 5 verknüpft. Aus allen Daten wird schließlich in Schritt 6 ein dynamisches Strukturmodell erzeugt, das eine Darstellung der statischen, lithologischen 3D-Struktur und der zeitlichen Veränderung des Fluids im Reservoir ermöglicht. Dadurch können Veränderungen im Fluid, die beispielsweise nach einer Injektion von Wasser oder Gas auftreten, beobachtet werden. Die Veränderungen werden vorzugsweise auf dem Bildschirm eines Rechners dargestellt und können wahlweise zeitlich vorwärts oder rückwärts betrachtet werden. Wenn die passiv aufgenommenen Daten kontinuierlich aufgenommen und gespeichert werden, ist es möglich, die Veränderungen zu jedem Zeitpunkt in der Vergangenheit zu betrachten (Forensische Spektroskopie). Außerdem ist es ist jederzeit möglich, die Analyseparameter neu zu bestimmen, was ein wesentlicher Vorteil gegenüber der bekannten 4 D Seismic ist.

Optional können auch weitere geophysikalische Daten in Schritt 3 aufgenommen und in das dynamische Strukturmodell integriert werden.

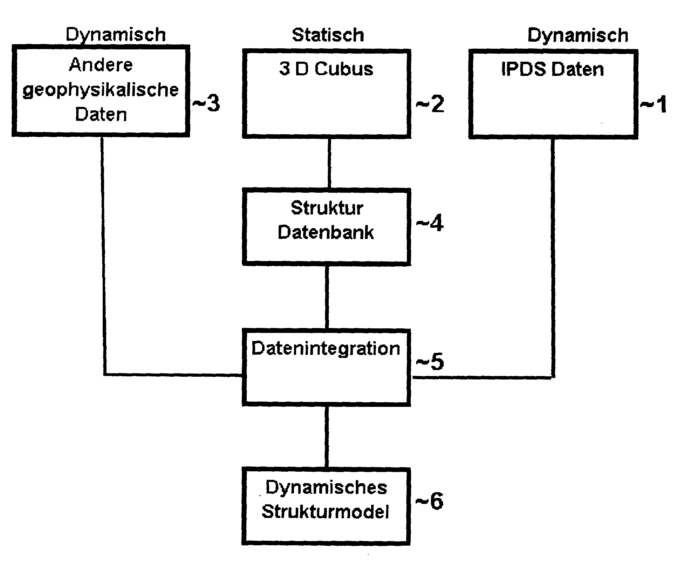

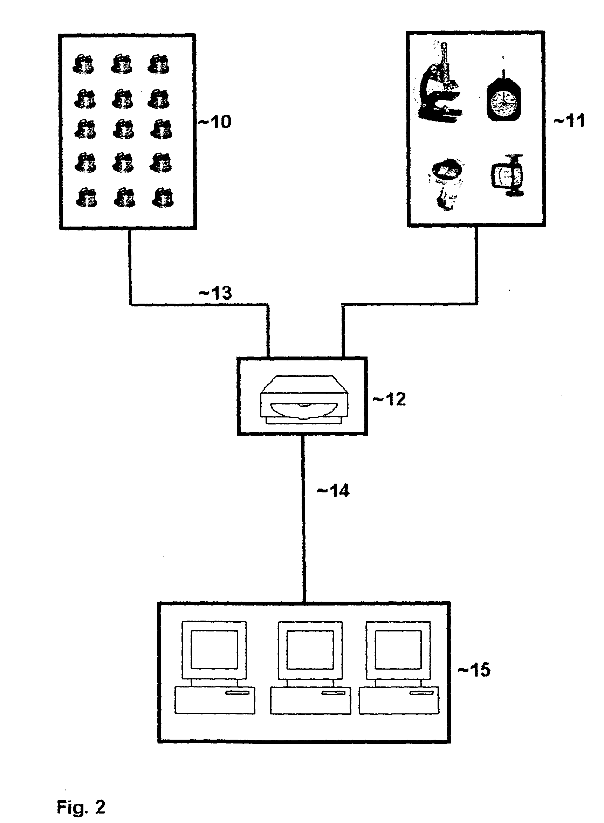

Fig. 2 zeigt eine schematische Blockdarstellung eines Systems, mittels dessen Veränderungen eines Fluids in einem unterirdischen Reservoir beobachtet werden können. Darin bezeichnet der Block 10 mehrere passive, akustische Sensoren, die an verschiedenen Orten fest installiert sind. Die von den Sensoren 10 aufgenommenen Daten werden über eine Kommunikationsverbindung 13, insbesondere per Funk an eine Auswerteeinheit 12 übertragen. Wenn nicht bereits vorhanden, werden die reflexionsseismischen 3D-Daten 3 in der Verarbeitungseinrichtung 12 gespeichert. Block 11 bezeichnet ein oder mehrere Messinstrumente, mittels derer weitere geophysikalische Daten bestimmt werden können. Diese Daten können ebenfalls in die Verarbeitungseinrichtung mit integriert werden.

Die Verarbeitungseinrichtung 12 erzeugt aus den vorhandenen Daten ein dynamisches Strukturmodell, in dem dynamische Veränderungen im Fluid beobachtet werden können. Die Daten können wahlweise direkt an der Verarbeitungseinrichtung 12 angesehen werden oder sie werden über eine Datenverbindung 14 an einen oder mehrere Rechner 15 gesendet und können dort abgerufen werden. Durch die permanente Installation der Sensoren 10 ist es möglich, Veränderungen im Fluid online zu beobachten.

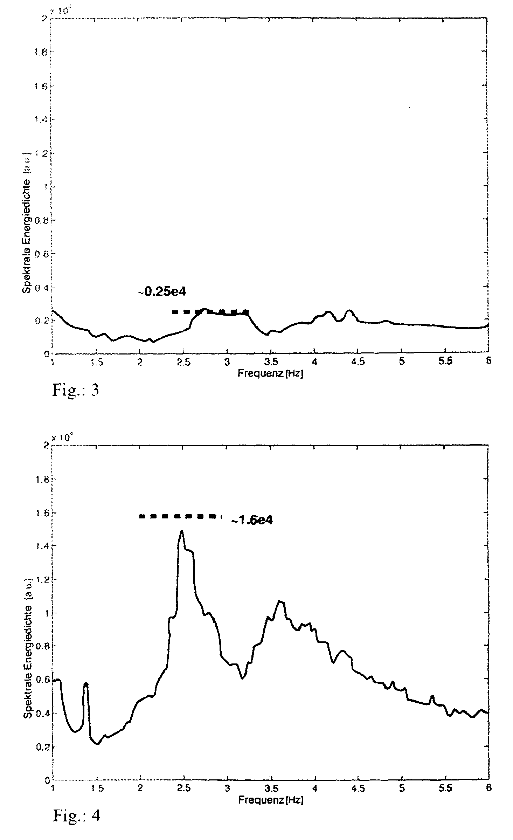

Fig. 3 zeigt das Spektrum einer Gasquelle im laufenden Betrieb bei offener Bohrung. Wie zu erkennen ist, beträgt das Maximum bei ca. 3Hz etwa 0,25e4 Einheiten.

Fig. 4 zeigt das Spektrum derselben Quelle 6 Monate später bei geschlossener Bohrung. Diese Daten wurden mittels der Sensoren 10 passiv aufgenommen. Wie zu erkennen ist, zeigt das Spektrum von Fig. 4 wesentlich höhere Maxima als das jenige von Fig. 3. Dies rührt daher, dass sich durch das Schließen der Bohrung im Laufe von 6 Monaten der interne Reservoirdruck stark erhöht hat und die durch das Fluid verursachte Anomalie im seismischen Spektrum verstärkt wird.

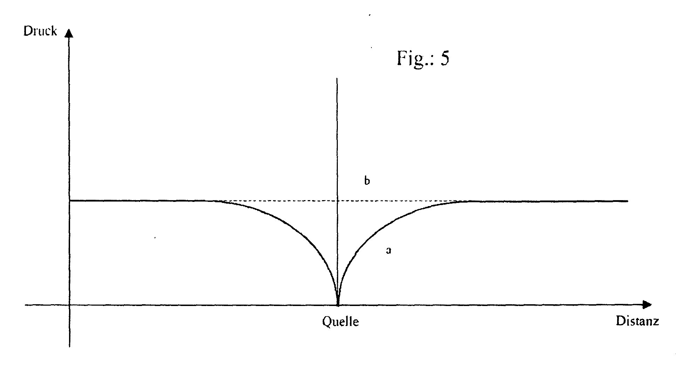

Fig. 5 zeigt schließlich die symbolische Druckverteilung nahe einer offenen bzw. geschlossenen Bohrung. Darin bedeuten: a) = Druckverlauf im Reservoir bei offener Bohrung und b) = Druckpegel p₀ im Reservoir bei geschlossener Bohrung.

Das dargestellte System ermöglicht eine kontinuierliche Analyse des dynamischen Verhaltens der Fluida im Reservoir. Mit Hilfe der vom System gelieferten Informationen kann der Ausbeutungsfaktor des Reservoirs wesentlich erhöht werden.

Im Falle einer permanenten Installation der Sensoren 10 eignet sich dieses System aber auch zu Erfassung solcher akustischer Daten, die sich nicht auf das Verhalten der Fluida im Reservoir beziehen, aus denen aber Erkenntnisse über Veränderungen der Umweltverhältnisse abgeleitet werden können. So kann z. B: ein Befahren oder das Betreten des gemessenen Gebiets anhand der Sensorsignale 10 erkannt werden. Somit ist es möglich, ein Explorationsgebiet gegen mögliche terroristische Angriffe zu schützen oder das Eindingen unberechtigter Personen zu erkennen.

## Patentansprüche

1. Verfahren zum Erfassen von Veränderungen eines Fluids in einem unterirdischen Reservoir, wobei Daten (1) mit Hilfe eines passiven Verfahrens, bei dem niederfrequente akustische Signale passiv mittels akustischer Sensoren (10) gemessen werden, zu mehreren Zeitpunkten erfasst werden, **dadurch gekennzeichnet, dass** die Daten (1) mit statischen 3D-Daten (2) überlagert werden, die mit Hilfe eines reflexsionsseismischen Verfahrens erfasst wurden, so dass eine zeitliche Darstellung der Veränderung des Fluids im Reservoir möglich ist.

2. Verfahren nach Anspruch 1, **dadurch gekennzeichnet, dass** Sensoren fest installiert sind und in diesem Zustand die Sensoren ausgelesen werden.

3. Verfahren nach Anspruch 1 oder 2, **dadurch gekennzeichnet, dass** die von den Sensoren 10 aufgenommenen Daten (1) über eine Kommunikationsschnittstelle (13), vorzugsweise per Funk, an eine Auswerteeinheit (12) übertragen werden.

4. Verfahren nach einem der vorhergehenden Ansprüche, **dadurch gekennzeichnet, dass** die 3D-Strukturdaten (2) nur einmal aufgenommen werden.

5. Verfahren nach einem der vorhergehenden Ansprüche, **dadurch gekennzeichnet, dass** mit Hilfe aller Daten (1, 2) ein dynamisches Strukturmodell erstellt, das eine Beobachtung der zeitlichen Veränderung des Fluids ermöglicht.

6. Verfahren nach Anspruch 5, **dadurch gekennzeichnet, dass** weitere geophysikalische Daten (3) erfasst und in das Modell (6) aufgenommen werden.

7. System zum Erfassen von Veränderungen eines Fluids in einem unterirdischen Reservoir, **gekennzeichnet durch** mehrere akustische Sensoren (10) zum Messen niederfrequenter akustischer Signale in einem rein passiven Verfahren, und eine Verarbeitungseinheit (12) mit statischen 3D-Daten, die mit Hilfe eines reflexionsseismischen Verfahrens erfasst wurden, wobei die Verarbeitungseinrichtung (12) aus den passiv gemessenen Daten (1) und den statischen 3D-Daten ein dynamisches Strukturmodell (6) erzeugt, das eine Darstellung des zeitabhängigen Verhaltens des Fluids ermöglicht.

8. System nach Anspruch 7 **dadurch gekennzeichnet, dass** die akustischen Sensoren (10) dauerhaft, d. h. zur Durchführung mehrerer Messungen, installiert sind.

9. Verfahren zum Überwachen eines geografischen Gebiets in Bezug auf das Eindringen von Personen oder Fahrzeugen, **dadurch gekennzeichnet, dass** mit Hilfe eines passiven Verfahrens, bei dem niederfrequente akustische Signale passiv mittels akustischer Sensoren (10) gemessen werden, Daten (1) erfasst werden, und das Spektrum der Sensorsignale ausgewertet wird.

10. Verfahren nach Anspruch 9, **dadurch gekennzeichnet, dass** das Spektrum in Bezug auf Anomalien in der Amplitude ausgewertet wird, um das Eindringen von Personen oder Fahrzeugen zu erkennen.

## Geänderte Patentansprüche

### Geänderte Patentansprüche gemäss Regel 137(2) EPÜ.

**1.** Verfahren zum Erfassen von Veränderungen eines Fluids in einem unterirdischen Reservoir, bei dem mit Hilfe von Sensoren (10), die an oder nahe der Erdoberfläche angeordnet werden, niederfrequente akustische Signale des natürlichen Erdrauschens zu mehreren Zeitpunkten aufgezeichnet und die aufgezeichneten Signale mittels einer Frequenzanalyse ausgewertet werden, um daraus das Kohlenwasserstoff-Vorkommen betreffende Daten (1) zu ermitteln, **dadurch gekennzeichnet, dass** die so ermittelten Daten (1) mit statischen 3D-Daten (2) überlagert werden, die die geologische Struktur des unterirdischen Reservoirs repräsentieren und mit Hilfe eines reflexionsseismischen Verfahrens erfasst wurden, wobei ein Modell (6) erzeugt wird, das in der Lage ist, zeitliche Veränderungen des Fluids im Reservoir anzuzeigen.

**2.** Verfahren nach Anspruch 1, **dadurch gekennzeichnet, dass** Sensoren fest installiert sind und in diesem Zustand die Sensoren ausgelesen werden.

**3.** Verfahren nach Anspruch 1 oder 2, **dadurch gekennzeichnet, dass** die von den Sensoren 10 aufgenommenen Daten (1) über eine Kommunikationsschnittstelle (13), vorzugsweise per Funk, an eine Auswerteeinheit (12) übertragen werden.

**4.** Verfahren nach einem der vorhergehenden Ansprüche, **dadurch gekennzeichnet, dass** die 3D-Strukturdaten (2) nur einmal aufgenommen werden.

**5.** Verfahren nach einem der vorhergehenden Ansprüche, **dadurch gekennzeichnet, dass** mit Hilfe aller Daten (1, 2) ein dynamisches Strukturmodell erstellt, das eine Beobachtung der zeitlichen Veränderung des Fluids ermöglicht.

**6.** Verfahren nach Anspruch 5, **dadurch gekennzeichnet, dass** weitere geophysikalische Daten (3) erfasst und in das Modell (6) aufgenommen werden.

**7.** System zum Erfassen von Veränderungen eines Fluids in einem unterirdischen Reservoir, **gekennzeichnet durch** mehrere akustische Sensoren (10) zum Messen niederfrequenter akustischer Signale des natürlichen Erdrauschens in einem rein passiven Messverfahren, und eine Verarbeitungseinrichtung (12) mit statischen 3D-Daten (2), die mit Hilfe eines reflexionsseismischen Verfahrens erfasst wurden, wobei die Verarbeitungseinrichtung (12) aus den passiv gemessenen Daten (1) und den statischen, reflexionsseismischen 3D-Daten (2) ein dynamisches Strukturmodell (6) erzeugt, das in der Lage ist, zeitliche Veränderungen des Fluids im Reservoir anzuzeigen.

**8.** System nach Anspruch 7 **dadurch gekennzeichnet, dass** die akustischen Sensoren (10) dauerhaft, d. h. zur Durchführung mehrerer Messungen, installiert sind.
